# FASCICULE DE BREVET EUROPEEN

(11) **EP 2 039 885 B1**
(45) Date de publication et mention de la délivrance du brevet: **09.02.2011**
(21) Numéro de dépôt: 08164784.4
(22) Date de dépôt: 22.09.2008
(51) Int. Cl.: F01D 9/04, F01D 25/24

(54) **Organe de verrouillage de secteurs d'anneau sur un carter de turbomachine, comprenant des moyens permettant sa prehension**
Verriegelungsorgan von Ringsektoren an einem Turbinengehäuse, das Greifmitteln umfasst
Element for locking ring sectors on the casing of a turbomachine, comprising handling means

(30) Priorité: 24.09.2007 FR 0757801
(43) Date de publication de la demande: 25.03.2009
(73) Titulaire: Snecma, 75015 Paris (FR)
(72) Inventeur: Audeon, David, 91300 Massy (FR); Benderradji, Kamel, 77000 Livry sur Seine (FR)
(74) Mandataire: Ilgart, Jean-Christophe

(56) Documents cités:
- EP-A- 0 967 364
- EP-A- 1 099 826
- FR-A- 2 887 920
- US-A- 5 197 853

## Description

### DOMAINE TECHNIQUE

La présente invention se rapporte de façon générale à un organe de verrouillage pour dispositif de fixation de secteurs d'anneau sur un carter de turbomachine d'aéronef, par exemple un carter de turbine.

L'invention concerne également une turbomachine pour aéronef comprenant de tels organes de verrouillage, cette turbomachine pouvant prendre la forme d'un turbopropulseur ou d'un turboréacteur.

### ETAT DE LA TECHNIQUE ANTERIEURE

De l'art antérieur, il est connu des secteurs d'anneau fixés circonférentiellement sur le carter autour des aubes mobiles de la turbine d'un turboréacteur, ces secteurs formant conjointement une enveloppe cylindrique continue délimitant extérieurement la veine de passage des gaz dans la turbine. Les secteurs d'anneau sont montés sur un carter interne de la turbine au moyen d'éléments de carter, dénommés éléments intermédiaires de carter ou encore entretoises, sur lesquels ils sont accrochés à leur extrémité avant et maintenus à leur extrémité arrière par des organes de verrouillage en forme de C ou de U couché (voir par exemple le document FR 2 887 920 A1). Ces derniers sont engagés axialement/longitudinalement depuis l'arrière sur des rebords circonférentiels des extrémités arrière des secteurs d'anneau et des éléments intermédiaires de carter, pour les maintenir plaqués radialement les uns contre les autres.

Cette fixation des secteurs d'anneau sur les éléments intermédiaires du carter de la turbine leur permet de suivre les dilatations et contractions thermiques du carter de la turbine, dans lequel on injecte des gaz chauds ou des gaz froids pour contrôler ses dilatations et contractions thermiques afin de conserver un jeu radial aussi faible que possible entre les surfaces internes des secteurs d'anneau et les extrémités des aubes mobiles de la turbine, et ainsi augmenter le rendement de la turbine.

De manière connue, les organes de verrouillage forment conjointement un dispositif de verrouillage annulaire centré sur l'axe de la turbomachine, chaque organe ne formant donc qu'un secteur angulaire de ce dispositif. Chaque organe comprend deux branches longitudinales de serrage s'étendant axialement/longitudinalement vers l'arrière et raccordées à leurs extrémités arrière par une branche transversale de raccord, tandis que leurs extrémités avant sont destinées à plaquer entre celles-ci au moins un secteur d'anneau contre au moins un élément de carter. Ces deux derniers éléments plaqués radialement l'un contre l'autre sont effectivement prévus pour être logés dans l'espace formé entre les deux branches longitudinales, ouvert longitudinalement vers l'avant.

Les organes de verrouillage sont conçus, notamment en ce qui concerne l'élasticité et l'écartement des deux branches longitudinales, pour que le serrage radial appliqué soit performant. Or dans un tel cas, l'extraction de ces organes de verrouillage, nécessitée par exemple lors des opérations de maintenance de la turbine, s'avère extrêmement difficile à réaliser, en raison de l'importante force de serrage radial exercée par les branches longitudinales sur les rebords circonférentiels. De ce fait, l'extraction requiert habituellement l'emploi d'un outillage par l'opérateur, outillage présentant généralement une forme non adaptée, susceptible d'endommager les organes de verrouillage, ainsi que les éléments environnants. Une telle situation se présente par exemple lors de l'utilisation d'un tournevis, que l'opérateur tente de glisser entre l'une des branches longitudinales de l'organe et le rebord circonférentiel en contact de cette branche. En effet, le tournevis est alors utilisé comme un bras de levier, susceptible d'endommager à la fois la branche longitudinale et le rebord circonférentiel concernés, ou encore de blesser l'opérateur.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet un organe de verrouillage pour dispositif de fixation de secteurs d'anneau sur un carter de turbomachine d'aéronef, ledit organe comprenant deux branches longitudinales de serrage s'étendant vers l'arrière et raccordées à leurs extrémités arrière par une branche transversale de raccord, leurs extrémités avant étant destinées à plaquer entre celles-ci au moins un secteur d'anneau contre au moins un élément de carter. Selon l'invention, il comprend en outre des moyens permettant sa préhension, agencés en saillie vers l'arrière à partir de ladite branche transversale de raccord.

Lesdits moyens permettant la préhension de l'organe comprennent une extension en saillie longitudinalement vers l'arrière à partir de ladite branche transversale de raccord, ainsi qu'au moins un évidement pratiqué dans ladite extension, cet évidement formant une surface de butée orientée vers ladite branche transversale de raccord.

Ainsi, l'invention prévoit de façon originale des moyens permettant sa préhension, destinés à faciliter son extraction après qu'il ait été mis en place sur les secteurs d'anneau. Le positionnement particulier de ces moyens, déportés vers l'arrière par rapport aux branches longitudinales et transversale de l'organe, implique qu'ils peuvent aisément coopérer avec un outil d'extraction sans risquer de détériorer les fonctionnalités de cet organe de verrouillage, en particulier donc en raison de l'absence de contact direct entre l'outil et les trois branches précitées. En d'autres termes, dans ce cas où les moyens permettant la préhension sont séparés de l'espace interbranches longitudinales par la branche transversale de raccord, dans la direction longitudinale/axiale, le fait d'agripper ces moyens avec un outil n'engendre aucune sollicitation mécanique directe sur les branches longitudinales de serrage, qui ne risquent donc pas d'être endommagées par la pression de l'outil.

La surface de butée peut servir de surface d'appui pour un outil d'extraction, qui peut ensuite être sollicité dans la direction longitudinale vers l'arrière afin de provoquer l'extraction souhaitée. Naturellement, la surface de butée orientée vers la branche transversale de raccord peut être sensiblement parallèle à cette dernière, à savoir orientée selon la direction radiale, mais peut alternativement être inclinée par rapport à cette même direction, le but restant cependant toujours de constituer avec cette surface une butée dans la direction longitudinale vers l'arrière, pour un outil sollicité dans cette dernière direction après avoir été introduit dans l'évidement associé.

De préférence, l'organe de verrouillage forme un secteur angulaire d'un dispositif de verrouillage annulaire.

Toujours de manière préférentielle, ladite extension en saillie s'étend sur tout ou partie dudit secteur angulaire selon la direction circonférentielle, de même que chaque évidement s'étend sur toute ou partie de ladite extension en saillie selon la direction circonférentielle.

A titre d'exemple, on prévoit que l'organe comprend deux rainures chacune formant évidement dans ladite extension en saillie, lesdites rainures s'ouvrant dans des sens opposés de la direction radiale selon laquelle sont espacées lesdites deux branches longitudinales de serrage, assimilables à des mors de serrage.

L'invention a également pour objet un dispositif de fixation de secteurs d'anneau sur un carter de turbomachine d'aéronef, comprenant des éléments de carter formés avec des premiers rebords circonférentiels arrière sur lesquels sont appliqués des seconds rebords circonférentiels arrière des secteurs d'anneau, le dispositif de fixation comprenant en outre une pluralité d'organes de verrouillage tels que décrits ci-dessus, engagés sur lesdits premiers et seconds rebords circonférentiels pour les maintenir plaqués les uns contre les autres. Dans un tel cas, les premiers et seconds rebords circonférentiels, s'étendant vers l'arrière selon la direction longitudinale, pénètrent donc à travers l'ouverture avant des organes définie entre les branches longitudinales de serrage, afin d'y être maintenus plaqués radialement les uns contre les autres.

L'invention a également pour objet une turbine de turbomachine d'aéronef comprenant un dispositif de fixation de secteurs d'anneau tel que décrit ci-dessus, et/ou au moins un organe de verrouillage tel que décrit ci-dessus. Il pourrait alternativement s'agir d'un compresseur de turbomachine, sans sortir du cadre de l'invention.

Enfin, l'invention a pour objet une turbomachine d'aéronef comprenant une turbine tel que décrite ci-dessus, et/ou un dispositif de fixation de secteurs d'anneau tel que décrit ci-dessus, et/ou au moins un organe de verrouillage tel que décrit ci-dessus, cette turbomachine pouvant indifféremment être un turboréacteur ou un turbopropulseur.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partielle en coupe longitudinale d'un dispositif de fixation de secteurs d'anneau sur un carter de turbine de turbomachine d'aéronef, selon un mode de réalisation préféré de la présente invention ;
- la figure 2 représente une vue partielle et agrandie de celle montrée sur la figure 1 ;
- la figure 3 représente une vue en perspective d'un organe de verrouillage appartenant au dispositif de fixation de secteurs d'anneau montré sur les figures 1 et 2 ;
- la figure 4 représente une vue similaire à celle montrée sur la figure 3, l'organe de verrouillage se présentant sous la forme d'une alternative de réalisation ; et
- les figures 5a et 5b schématisent un procédé d'extraction de l'organe de verrouillage montré sur les figures 1 à 3.

### EXPOSÉ DÉTAILLÉ DE MODES DE RÉALISATION PRÉFÉRÉS

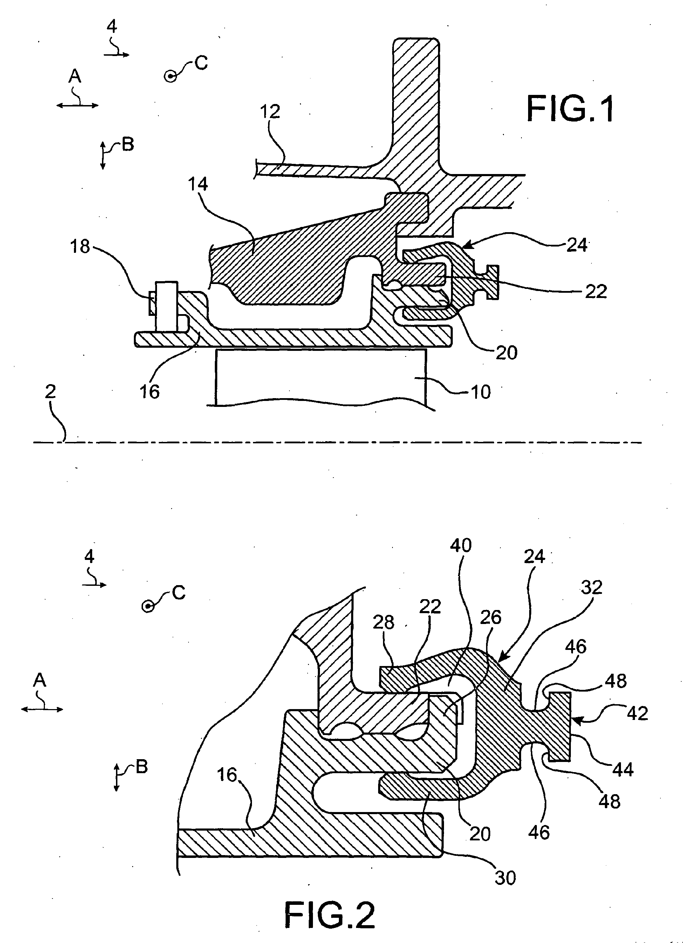

En référence conjointement aux figures 1 et 2, on peut apercevoir un dispositif de fixation de secteurs d'anneau sur un carter de turbine de turbomachine d'aéronef, selon un mode de réalisation préféré de la présente invention.

Sur les figures, la direction A correspond à la direction longitudinale ou direction axiale, parallèle à l'axe longitudinal 2 de la turbine et de la turbomachine. La direction B correspond quant à elle à la direction radiale de la turbine, et la direction C à la direction circonférentielle. De plus la flèche 4 schématise la direction principale d'écoulement des gaz au sein de la turbomachine, parallèle à la direction A, les termes « avant », « amont », « arrière », « aval » utilisés dans la suite de la description étant à considérer par rapport au sens de cette flèche 4.

Sur la figure 1, la référence 10 désigne les aubes mobiles d'un étage de turbine haute-pression d'un turboréacteur, qui tournent dans un carter de turbine 12 à l'intérieur duquel sont fixés des éléments de carter 14, dénommés entretoises ou éléments intermédiaires de carter. Les éléments 14 portent des secteurs d'anneau 16 disposés circonférentiellement autour de l'axe de rotation 2 de la turbine, selon la direction C, les surfaces internes de ces secteurs d'anneau formant une surface cylindrique continue qui délimite extérieurement une veine de passage de gaz dans la turbine.

Les secteurs d'anneau 16 ont une étendue angulaire autour de l'axe de la turbine de 10 à 20° environ, et sont par exemple au nombre d'une trentaine.

Chaque secteur d'anneau 16 comprend à son extrémité amont ou extrémité avant un rebord circonférentiel 18 en portion de cylindre, par lequel il est accroché ou fixé sur une entretoise 14, et comprend également à son extrémité arrière ou extrémité aval un rebord circonférentiel 20 en portion de cylindre qui est appliqué sur un rebord circonférentiel 22 correspondant en portion de cylindre de l'entretoise 14. Dans la suite, le rebord circonférentiel 22 est dit premier rebord circonférentiel, et le rebord circonférentiel 20 est dit second rebord circonférentiel.

Les deux rebords circonférentiels 20 et 22 s'étendant dans la direction A sont maintenus plaqués l'un contre l'autre selon la direction B dans laquelle ils sont superposés, par un organe de verrouillage 24 en forme de C ou de U couché qui est engagé par l'arrière sur les rebords circonférentiels 20 et 22 et qui les maintient serrés radialement l'un sur l'autre.

Conjointement, les organes de verrouillage 24 forment un dispositif de verrouillage annulaire centré sur l'axe 2, faisant partie intégrante du dispositif de fixation des secteurs d'anneau. Ainsi, chaque organe 24 prend la forme d'un secteur angulaire du dispositif de verrouillage annulaire, s'étendant par exemple sur 10 à 20° environ. Pour former un anneau complet, de préférence continu, ils sont prévus adjacents dans la direction C, par exemple au nombre d'une trentaine centrés sur l'axe 2.

A cet égard, il est noté que si l'étendue angulaire des organes 24 autour de l'axe 2 de la turbine peut être du même ordre que celle des secteurs d'anneau 16, cette étendue peut alternativement être supérieure, sans sortir du cadre de l'invention. Ainsi, selon les cas, il est possible de prévoir un organe de verrouillage 24 par secteur d'anneau 16, ou bien un organe de verrouillage 24 pour plusieurs secteurs d'anneau 16.

Les secteurs d'anneau 16, les entretoises 14 et les organes de verrouillage 24 sont métalliques, et les organes de verrouillage 24 sont montés élastiquement de façon serrée sur les rebords circonférentiels 20 et 22, pour les plaquer l'un contre l'autre avec une certaine précontrainte dans la direction radiale B, tel que cela sera détaillé ci-après.

Comme cela est représenté schématiquement sur la figure 2, le second rebord circonférentiel 20 du secteur d'anneau 16 se termine à son extrémité arrière par des dents radiales 26 orientées vers l'extérieur, et engagées dans des encoches correspondantes du premier rebord circonférentiel 22 de l'entretoise 14, de façon à immobiliser chaque secteur d'anneau 16 en rotation autour de l'axe 2 de la turbine sur une entretoise 14.

De façon générale, chaque organe de verrouillage 24 comprend deux branches longitudinales de serrage 28 et 30 radialement externe et radialement interne respectivement, qui sont reliées rigidement entre elles à leur extrémité arrière par une branche transversale de raccord 32, et dont les extrémités avant sont appliquées sur la face cylindrique externe du premier rebord circonférentiel 22 de l'entretoise 14 et sur la face cylindrique interne du second rebord circonférentiel 20 du secteur d'anneau 16, respectivement. Globalement, les branches circonférentielles 28, 30 s'étendent longitudinalement dans la direction A, tandis que la branche circonférentielle 32 s'étend selon la direction radiale B, pour relier les deux extrémités arrière des branches 28, 30. Ces deux dernières branches, espacées selon la direction B, forment donc conjointement un espace interbranches 40 ouvert vers l'avant dans la direction A pour le passage des rebords 20, 22, et fermé vers l'arrière dans cette même direction A par la branche de raccord 32.

Plus spécifiquement en référence à la figure 2, l'une des particularités de la présente invention réside dans l'implantation de moyens permettant la préhension de l'organe de verrouillage 24, globalement agencés en saillie vers l'arrière à partir de la branche transversale de raccord 32.

Ces moyens, auxquels est attachée la référence numérique 42, prennent de préférence la forme d'une extension 44 en saillie longitudinalement vers l'arrière à partir de la branche transversale de raccord 32, dans laquelle il est réalisé au moins un évidement 46, et de préférence deux évidements 46 opposés l'un à l'autre. De préférence, les branches 28, 30, 32 et l'extension 44 sont réalisées d'une seule pièce, et les évidements 46 préférentiellement obtenus par usinage.

Dans cette configuration, chaque évidement 46 prend la forme d'une empreinte ou d'une rainure cheminant selon la direction C, en étant ouverte radialement vers l'extérieur et vers l'intérieur, respectivement. La fonction d'une telle rainure 46 est d'offrir avec son flanc latéral le plus arrière une surface de butée 48 orientée vers la branche transversale de raccord 32. Cette surface de butée 48, qui est ici de préférence orthogonale à l'axe 2 et parallèle à la direction radiale B, peut donc servir de surface d'appui pour un outil d'extraction de l'organe 24, qui peut ensuite être sollicité dans la direction longitudinale vers l'arrière afin de provoquer l'extraction souhaitée. En effet, les moyens 42 permettant la préhension de l'organe 24, sont destinés à faciliter son extraction après qu'il ait été mis en place sur les secteurs d'anneau 16. Le positionnement particulier de ces moyens, déportés vers l'arrière par rapport à la branche transversale 32, implique qu'ils peuvent aisément coopérer avec un outil d'extraction sans risquer de détériorer les fonctionnalités de cet organe de verrouillage 24, en particulier donc en raison de l'absence de contact direct entre l'outil et les branches 28, 30, 32. Comme cela sera détaillé ci-après, le fait d'agripper ces moyens 42 avec un outil pénétrant dans les évidements 46 et venant en appui contre les surfaces de butée 48 n'engendre aucune sollicitation mécanique directe sur les branches longitudinales de serrage 28, 30, qui ne risquent donc pas d'être endommagées par la pression de l'outil.

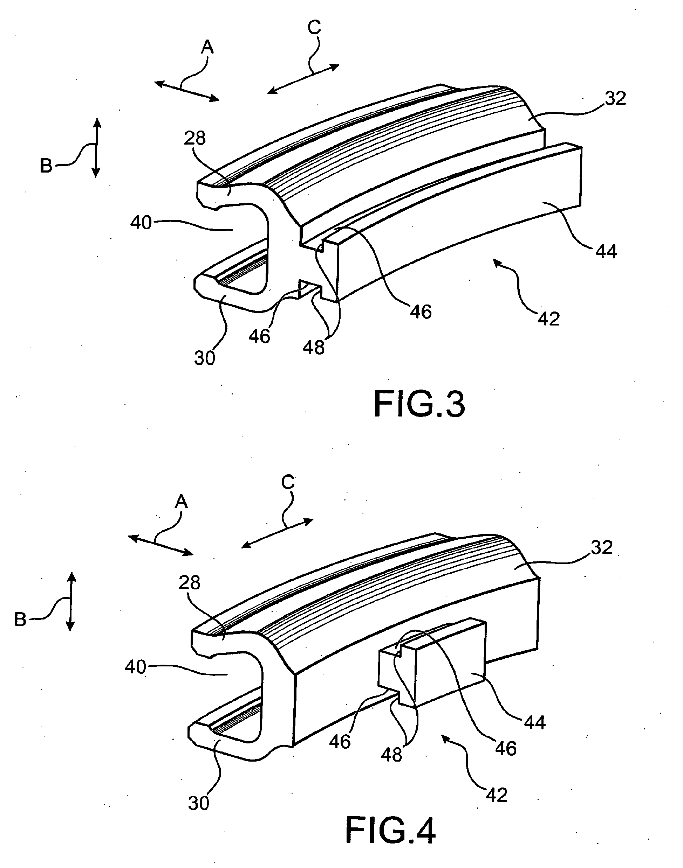

Sur la figure 3, on peut apercevoir que l'extension en saillie 44 s'étend sur tout le secteur angulaire selon la direction circonférentielle C, de sorte que les branches 28, 30, 32 et l'extension 44 présentent chacune une même longueur angulaire selon cette même direction C. Il pourrait naturellement en être autrement, comme cela est représenté en figure 4 sur laquelle l'extension 44 dispose d'une longueur angulaire réduite selon la direction C, par rapport à celle des branches 28, 30, 32. Cette configuration est avantageuse en ce sens qu'elle permet de réduire la masse globale de chaque organe de verrouillage 24.

De même, quelque soit celui des deux cas ci-dessus considéré, chaque rainure 46 ouverte radialement s'étend sur toute l'extension 44 selon cette même direction C, ou bien seulement sur une portion de celle-ci, sans sortir du cadre de l'invention.

Enfin, il est indiqué que si les deux rainures 46 montrées sur la figure 2 sont alignées dans la direction radiale B, à savoir situées à un même niveau selon la direction longitudinale A, elles pourraient être décalées l'une de l'autre selon cette dernière direction, sans sortir du cadre de l'invention.

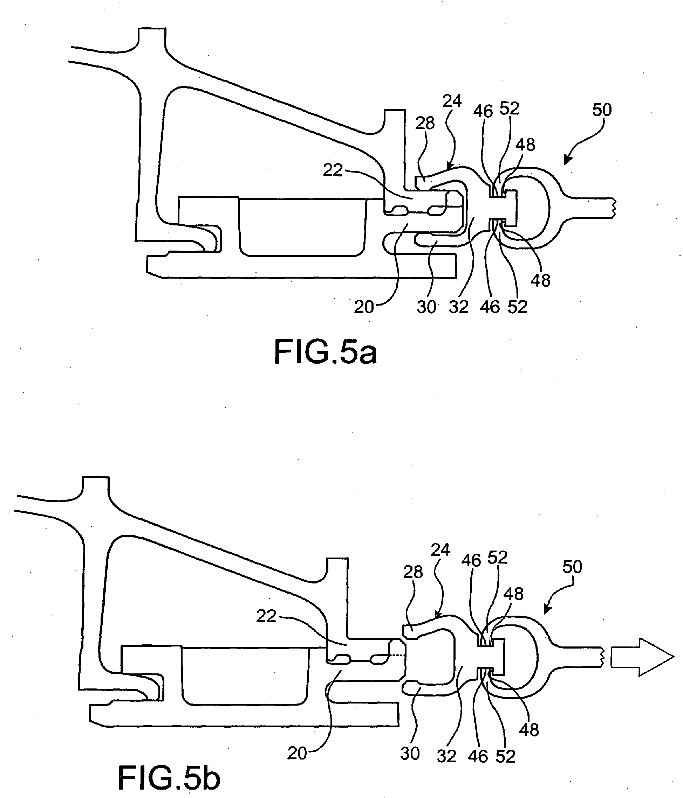

En référence à présent aux figures 5a et 5b, il est schématisé un procédé visant à l'extraction d'un organe de verrouillage 24 initialement situé dans sa position de serrage des secteurs d'anneau 16, montrée sur les figures précédentes. Pour ce faire, un outil 50 de forme appropriée est employé, cet outil présentant globalement une tête en forme d'étrier comportant deux bras respectivement pourvus de deux extrémités 52 en regard l'une de l'autre, susceptibles d'être placées selon la direction B. Les deux extrémités en regard 52 sont insérées respectivement dans les deux rainures 46, par exemple en déplaçant circonférentiellement l'outil par rapport à l'organe 24, afin d'obtenir la pénétration désirée. Ensuite, l'outil 50 est sollicité dans la direction longitudinale A vers l'arrière, manuellement ou automatiquement, ce qui a pour effet de mettre en contact les extrémités 52 avec leurs surfaces de butée respectives 48, comme montré sur la figure 5a. La poursuite de cette action sur l'outil 50, schématisée par la flèche 54 sur la figure 5b, a pour conséquence de déplacer progressivement l'organe 24 dans la direction A par glissement vers l'arrière des branches 28, 30 sur les rebords 20, 22, jusqu'à l'extraction totale de l'organe 24 libérant les secteurs d'anneau 16 associés.

Bien entendu, diverses modifications peuvent être apportées par l'homme du métier à l'invention qui vient d'être décrite, uniquement à titre d'exemples non limitatifs.

## Revendications

1. Organe de verrouillage (24) pour dispositif de fixation de secteurs d'anneau sur un carter de turbomachine d'aéronef, ledit organe comprenant deux branches longitudinales de serrage (28, 30) s'étendant vers l'arrière et raccordées à leurs extrémités arrière par une branche transversale de raccord (32), leurs extrémités avant étant destinées à plaquer entre celles-ci au moins un secteur d'anneau (16) contre au moins un élément de carter (14),
comprennant en outre des moyens (42) permettant sa préhension, agencés en saillie vers l'arrière à partir de ladite branche transversale de raccord (32),
**caractérisé en ce que** lesdits moyens permettant la préhension de l'organe comprennent une extension (44) en saillie longitudinalement vers l'arrière à partir de ladite branche transversale de raccord (32), ainsi qu'au moins un évidement (46) pratiqué dans ladite extension, cet évidement formant une surface de butée (48) orientée vers ladite branche transversale de raccord (32).

2. Organe de verrouillage selon la revendication 1, **caractérisé en ce qu'**il forme un secteur angulaire d'un dispositif de verrouillage annulaire.

3. Organe de verrouillage selon la revendication 2, **caractérisé en ce que** ladite extension en saillie (44) s'étend, selon une direction circonférentielle (C), sur tout ou partie dudit secteur angulaire.

4. Organe de verrouillage selon la revendication 2 ou la revendication 4, **caractérisé en ce que** chaque évidement (46) s'étend, selon la direction circonférentielle (C), sur toute ou partie de ladite extension en saillie (44).

5. Organe de verrouillage selon la revendication 4, **caractérisé en ce qu'**il comprend deux rainures (46) chacune formant évidement dans ladite extension en saillie (44), lesdites rainures s'ouvrant dans des sens opposés d'une direction radiale (B) selon laquelle sont espacées lesdites deux branches longitudinales de serrage (28, 30).

6. Dispositif de fixation de secteurs d'anneau sur un carter de turbomachine d'aéronef, comprenant des éléments de carter (14) formés avec des premiers rebords circonférentiels arrière (22) sur lesquels sont appliqués des seconds rebords circonférentiels arrière (20) des secteurs d'anneau (16), **caractérisé en ce que** le dispositif de fixation comprend en outre une pluralité d'organes de verrouillage (24) selon l'une quelconque des revendications précédentes, engagés sur lesdits premiers et seconds rebords circonférentiels (22, 20) pour les maintenir plaqués les uns contre les autres.

7. Turbine de turbomachine d'aéronef comprenant un dispositif de fixation de secteurs d'anneau selon la revendication 6, et/ou au moins un organe de verrouillage selon l'une quelconque des revendications 1 à 5.

8. Turbomachine d'aéronef comprenant une turbine selon la revendication 7, et/ou un dispositif de fixation de secteurs d'anneau selon la revendication 6, et/ou au moins un organe de verrouillage selon l'une quelconque des revendications 1 à 5.

9. Turbomachine selon la revendication 8, **caractérisée en ce qu'**elle est un turboréacteur ou un turbopropulseur.

## Claims

1. A locking member (24) for a device for attaching ring sectors to an aircraft turbomachine casing, said member comprising two longitudinal clamping branches (28, 30) extending rearward and connected at their rear ends by a transverse connecting branch (52), their front ends being intended, between them, to press at least one ring sector (16) against at least one casing element (14),
further comprising means (42) allowing it to be grasped, these means being arranged such that they project rearward from said transverse connecting branch (32), **characterized in that** said means allowing the member to be grasped comprise an extension (44) projecting longitudinally rearward from said transverse connecting branch (32), and at least one recess (46) made in said extension, this recess forming an abutment surface (48) directed toward said transverse connecting branch (32).

2. The locking member as claimed in claim 1, **characterized in that** it forms an angular sector of an annular locking device.

3. The locking member as claimed in claim 2, **characterized in that** said projecting extension (44) extends, in a circumferential direction (c), over all or part of said angular sector.

4. The locking member as claimed in claim 2 or claim 3, **characterized in that** each recess extends, in the circumferential direction (c), over all or part of said projecting extension (44).

5. The locking member as claimed in claim 4, **characterized in that** it comprises two grooves (46) each forming a recess in said projecting extension (44), said grooves opening in opposite directions of a radial direction (B) in which said two longitudinal clamping branches are spaced apart (28, 30).

6. A device for attaching ring sectors to an aircraft turbomachine casing, comprising casing elements (14) formed with first rear circumferential rims (22) to which second rear circumferential rims (20) of the ring sectors (16) are applied, wherein the attachment device further comprises a plurality of locking members (24) as claimed in any one of the preceding claims, fitted onto said first and second circumferential rims (20, 22) in order to keep them pressed firmly against one another.

7. A turbine for an aircraft turbomachine comprising a device for attaching ring sectors as claimed in claim 6, and/or at least one locking member as claimed in any one of claims 1 to 5.

8. An aircraft turbomachine comprising a turbine as claimed in claim 7 and/or a device for attaching ring sectors as claimed in claim 6 and/or at least one locking member as claimed in any one of claims 1 to 5.

9. The turbomachine as claimed in claim 8, and which is a turbojet or a turboprop engine.

## Patentansprüche

1. Verriegelungsorgan (24) für eine Vorrichtung zur Befestigung von Ringsektoren an einem Turbomaschinengehäuse eines Flugzeugs, wobei das Organ zwei längs verlaufende Klemmschenkel (28, 30) umfasst, die sich nach hinten erstrecken und an ihren hinteren Enden durch einen quer verlaufenden Verbindungsschenkel (32) verbunden sind, wobei ihre vorderen Enden dazu bestimmt sind, zwischen diesen wenigstens einen Ringsektor (16) gegen wenigstens ein Gehäuseelement (14) zu drücken,
ferner umfassend Mittel (42), die sein Greifen ermöglichen und die von dem quer verlaufenden Verbindungsschenkel (32) ausgehend nach hinten vorspringend angeordnet sind,
**dadurch gekennzeichnet, dass** die Mittel, die das Greifen des Organs ermöglichen, eine Erweiterung (44), die von dem quer verlaufenden Verbindungsschenkel (32) ausgehend in Längsrichtung nach hinten vorspringt, sowie wenigstens eine in der Erweiterung ausgebildete Ausnehmung (46) umfassen, wobei diese Ausnehmung eine dem quer verlaufenden Verbindungsschenkel (32) zugewandte Anschlagfläche (48) bildet.

2. Verriegelungsorgan nach Anspruch 1, **dadurch gekennzeichnet, dass** es einen Winkelsektor einer ringförmigen Verriegelungsvorrichtung bildet.

3. Verriegelungsorgan nach Anspruch 2, **dadurch gekennzeichnet, dass** die vorspringende Erweiterung (44) sich in einer Umfangsrichtung (C) über den gesamten Winkelsektor oder einen Teil dessen erstreckt.

4. Verriegelungsorgan nach Anspruch 2 oder Anspruch 4, **dadurch gekennzeichnet, dass** jede Ausnehmung (46) sich in der Umfangsrichtung (C) über die gesamte vorspringende Erweiterung (44) oder einen Teil dieser erstreckt.

5. Verriegelungsorgan nach Anspruch 4, **dadurch gekennzeichnet, dass** es zwei jeweils eine Ausnehmung in der vorspringenden Erweiterung (44) bildende Nuten (46) aufweist, wobei die Nuten sich in entgegengesetzte Richtungen einer radialen Richtung (B) öffnen, entlang der die beiden längs verlaufenden Klemmschenkel (28, 30) voneinander beabstandet sind.

6. Vorrichtung zur Befestigung von Ringsektoren an einem Turbomaschinengehäuse eines Flugzeugs, mit Gehäuseelementen (14), die mit ersten rückseitigen Umfangsrändern (22) ausgebildet sind, an denen zweite rückseitige Umfangsränder (20) der Ringsektoren (16) angelegt sind, **dadurch gekennzeichnet, dass** die Befestigungsvorrichtung ferner eine Vielzahl von Verriegelungsorganen (24) nach einem der vorstehenden Ansprüche umfasst, die auf die ersten und zweiten Umfangsränder (22, 20) aufgesteckt sind, um sie gegeneinander gedrückt zu halten.

7. Turbine einer Turbomaschine eines Flugzeugs, umfassend eine Vorrichtung zur Befestigung von Ringsektoren nach Anspruch 6 und/oder wenigstens ein Verriegelungsorgan nach einem der Ansprüche 1 bis 5.

8. Turbomaschine eines Flugzeugs, umfassend eine Turbine nach Anspruch 7 und/oder eine Vorrichtung zur Befestigung von Ringsektoren nach Anspruch 6 und/oder wenigstens ein Verriegelungsorgan nach einem der Ansprüche 1 bis 5.

9. Turbomaschine nach Anspruch 8, **dadurch gekennzeichnet, dass** sie ein Turbostrahltriebwerk oder ein Turboprop-Triebwerk ist.
